Europäisches Patentamt

European Patent Office

Office européen des brevets

(11) Veröffentlichungsnummer: **0 129 691**
B1

# (12) EUROPÄISCHE PATENTSCHRIFT

(45) Veröffentlichungstag der Patentschrift:
07.01.87

(21) Anmeldenummer: 84105505.6

(22) Anmeldetag: 15.05.84

(51) Int. Cl.⁴: **B 32 B 15/01,** C 22 F 1/00,
F 16 K 31/00, G 05 D 23/02,
H 01 H 37/46

(54) Formstück aus einem Verbundwerkstoff und Herstellungsverfahren hierzu.

(30) Priorität: 28.05.83 DE 3319395

(43) Veröffentlichungstag der Anmeldung:
02.01.85 Patentblatt 85/1

(45) Bekanntmachung des Hinweises auf die Patenterteilung:
07.01.87 Patentblatt 87/2

(84) Benannte Vertragsstaaten:
AT BE CH DE FR GB LI NL SE

(56) Entgegenhaltungen:
DE - A - 2 837 541
DE - A - 2 856 082
DE - A - 3 102 745
DE - B - 2 026 629
US - A - 3 652 969
US - A - 3 725 835

SCIENTIFIC AMERICAN, Band 241, Nr. 5, November 1979, New York, USA; L.M. SCHETKY "Shape-memory alloys", Seiten 68-76

(73) Patentinhaber: G. Rau GmbH. & Co.,
Kaiser-Friedrich-Strasse 7, D-7530 Pforzheim (DE)

(72) Erfinder: Tautzenberger, Peter, Dr., Am Schiessrain 12,
D-7532 Niefern-Öschelbronn (DE)
Erfinder: Schneider, Friedrich E., Dipl.-Ing.,
Max-Planck-Strasse 23, D-7530 Pforzheim (DE)
Erfinder: Stöckel, Dieter, Prof. Dr., Rathausgasse 28,
D-7534 Birkenfeld (DE)

(74) Vertreter: Moser, Herbert, Dr.-Ing., Nowackanlage 15,
D-7500 Karlsruhe (DE)

## Beschreibung

Die Erfindung betrifft ein Bauelement zur Erzeugung einer Verstellbewegung unter Verwendung von mehreren miteinander verbundenen Abschnitten aus einem Verbundwerkstoff mit Formgedächtniseigenschaften, welche entsprechend der Anzahl der Abschnitte voneinander unabhängige temperaturspezifische Formänderungen ausführen. Ferner werden vorteilhafte Verfahrensschritte zur Herstellung dieses Bauelementes angegeben.

Durch verschiedene Veröffentlichungen sind Legierungen bekannt geworden, die nach geeigneter Behandlung aufgrund von Gefügeumwandlungen ihre Gestalt in Abhängigkeit von der Temperatur ändern (siehe beispielsweise J. Perkins, «Shape Memory Behavior and Thermoelastic Martensitic Transformations», Materials Science and Engineering 1981, 51, 181-192). Wesentliche Voraussetzung für den Formgedächtniseffekt ist eine martensitische Phasenumwandlung, wobei die beteiligten Phasen einen möglichst geringen Volumenunterschied sowie geordnete Gitterstrukturen aufweisen müssen. Der irreversible Formgedächtniseffekt (Einwegeffekt) bedeutet, dass nach einer Verformung im martensitischen Zustand lediglich einmal die Hochtemperaturform beim Erwärmen angenommen und anschliessend auch beim Abkühlen beibehalten wird. Eine reversible Formänderung (Zweiwegeffekt) kann durch entsprechende Behandlung induziert werden, wobei sich beim abwechselnden Erwärmen und Abkühlen jeweils wieder die Hochtemperatur- bzw. die Niedertemperaturform des Formstücks einstellt.

Die Temperaturen, bei denen die Phasenumwandlung einsetzt, bzw. beendet ist, werden üblicherweise wie folgt bezeichnet:

$A_s$: Temperatur, bei der die Bildung der Hochtemperaturphase beginnt,

$A_f$: Temperatur, bei der die Bildung der Hochtemperaturphase beendet ist,

$M_s$: Temperatur, bei der die Bildung der Niedertemperaturphase (Martensit) beginnt,

$M_f$: Temperatur, bei der die Bildung der Niedertemperaturphase (Martensit) beendet ist.

Die Umwandlungstemperaturen $A_s$, $A_f$, $M_s$ und $M_f$ sind bei Funktionselementen mit Formgedächtniseffekt in entsprechender Weise und mit dem Beginn, bzw. dem Ende der Formänderungen verknüpft.

Da die Formänderung mit relativ grossem Arbeitsvermögen abläuft, haben Formgedächtnislegierungen ein grosses, praxisbezogenes Interesse hervorgerufen und erscheinen zur Erschliessung eines breiten Anwendungsgebietes überall dort geeignet, wo temperaturabhängige Schaltvorgänge nahezu sprungartig ausgeführt werden sollen. Formgedächtnislegierungen können in vielen Anwendungsfällen Thermobimetall-Elemente ersetzen, deren Temperatur-Ausbiegungs-Charakteristik linear verläuft, so dass meist aufwendige Justierarbeiten erforderlich sind. Zwar lassen sich auf Thermobimetallgrundlage sprungartige Formänderungen, beispielsweise bei Schnappscheiben erreichen, diese weisen jedoch verschiedene Nachteile auf, welche in der praktischen Anwendung Mehrkosten bedingen.

Aus der US-A 3 725 835 ist die Anordnung eines Schaltstückes einer Kontaktanordnung bekannt, das zwischen zwei Drähten mit unterschiedlichen Formgedächtniseigenschaften aufgehängt ist. Die Formänderungen der beiden Drahtabschnitte dienen zur Ausführung von Schaltvorgängen. Dabei handelt es sich um zwei voneinander getrennte drahtförmige Bauelemente mit Formgedächtsniseigenschaften, die auf ein gemeinsames Schaltelement einwirken.

In der DE-B 2 026 629 ist eine Ventileinstellvorrichtung beschrieben, bei der ein Hubelement aus mehreren durch mechanische Verbindungshülsen hintereinandergeschalteten stabförmigen Elementen mit Formgedächtniseigenschaften und unterschiedlichen Umwandlungstemperaturen zusammengesetzt ist. Dadurch wird die Ventileinstellung für verschiedene Temperaturbereiche festgelegt. Ein einheitliches Bauelement mit Abschnitten von verschiedenen Formgedächtniseigenschaften liegt nicht vor.

Verschiedene Anwendungsmöglichkeiten für Bauelemente mit Formgedächtniseigenschaften sind in den Literaturstellen «Scientific American», Band 241, Nr. 5 L. M. Schetky, «Shape-Memory Alloys» Seiten 68 bis 76 und in «Nature», Band 255 vom 22. Mai 1985, R. W. Cahn, «Engine with a solid working fluid», Seiten 281 bis 282 angegeben.

Die Erfindung geht von der Aufgabenstellung aus, ein neuartiges Bauelement zu schaffen, welches bei einfachem Gesamtaufbau reversible bzw. irreversible Verstellbewegungen, beispielsweise zum Auslösen von Schaltvorgängen bei mehreren nacheinanderfolgenden Ansprechtemperaturen ermöglicht. Die Lösung dieser Aufgabenstellung erfolgt bei einem Bauelement der eingangs genannten Art dadurch, dass die Abschnitte mit Formgedächtniseigenschaften metallurgisch verbunden sind und ein integrales Formstück bilden. Ein solches aus mehreren Abschnitten mit Formgedächtniseigenschaften zusammengesetztes einheitliches Formstück kann beispielsweise als direkter Kontaktträger verschiedene nacheinanderfolgende Schaltvorgänge bei vorgegebenen Temperaturen durchführen, oder einen entsprechenden von mehreren Temperaturen abhängigen Bewegungsantrieb liefern. Dabei können sowohl mehrere Abschnitte mit unterschiedlichen Umwandlungstemperaturen, als auch mit unterschiedlicher Effektgrösse und Effektausbildung (Einweg-und/oder Zweiwegeffekt) kombiniert werden. Damit lassen sich die verschiedensten komplexen Schaltcharakteristiken erzeugen.

Da ein darartiges Formstück meist in einfacher Weise gehaltert werden soll, erscheint es in weiterer Ausbildung der Erfindung zweckmässig, einen Abschnitt im Formgedächtniseffekt als kraftschlüssigen Halteteil für das Formstück auszubilden. Dadurch lässt sich das Formstück beispielsweise in einer Nutenausnehmung einführen, und durch temperaturabhängige Formänderung festspannen.

Es kann ferner zweckmässig sein, das Formstück als Reihenanordnung von Abschnitten mit Formgedächtniseigenschaften und mit in gleicher Richtung sich verändernden Umwandlungstemperaturen auszubilden. Eine solche Linearanordnung ergibt beispielsweise für verschiedene Temperaturen verschiedene reversible bzw. irreversible Formen, die für Schaltvorgänge oder dergleichen ausgenutzt werden können.

Die Änderung der Umwandlungstemperaturen in den einzelnen Abschnitten kann zweckmässig durch eine lineare bzw. stufenförmige Änderung der chemischen Zusammensetzung dieser Abschnitte erzeugt werden. Dabei lassen sich Abschnitte verschiedener Grösse und Formgebung miteinander kombinieren.

Es kann ferner zweckmässig sein, an dem Formstück mindestens einen Abschnitt aus einer formgedächtnisfreien Komponente vorzusehen, bzw. aus einer Komponente mit Formgedächtniseigenschaften, die im Betriebszustand superelastische Eigenschaften aufweist. Formgedächtnislegierungen besitzen neben dem Formgedächtniseffekt unter bestimmten Bedingungen besonders hohe elastische Verformungswerte. Diese Erscheinung wird als Pseudo-oder Superelastizität bezeichnet. Superelastisches Verhalten kann beispielsweise in bestimmten Temperaturbereichen der Hochtemperaturphase durch spannungsbedingte Induzierung von Martensit auftreten.

Ein zweckmässiges Verfahren zur Herstellung eines derartigen Formstücks kann dadurch ausgeführt werden, dass die Formgedächtniskomponenten und gegebenenfalls formgedächtnisfreie Komponenten zu einem Verbundwerkstoff als Halbzeug metallurgisch verbunden werden, und dass das Formstück aus diesem Halbzeug geformt wird, wobei die erforderlichen Formgedächtniseigenschaften durch Behandlung des fertigen Formstücks erzeugt werden. In verschiedenen Fällen kann die Herstellung sowie die Verbindung der Komponenten zweckmässig pulvermetallurgisch erfolgen. Ein Werkstoff mit Reihenanordnung differentieller, in ihrer chemischen Zusammensetzung unterschiedlicher Abschnitte, lässt sich vorteilhaft durch Zonenschmelzen erzeugen.

In der Zeichnung sind Ausführungsbeispiele des Gegenstandes der Erfindung schematisch dargestellt; es zeigen:

Fig. 1 eine Plattenanordnung aus drei Komponenten,

Fig. 2 ein befestigtes Formstück aus der Plattenanordnung nach Fig. 1,

Fig. 3 eine Vorrichtung zur Temperatursteuerung des Wasserzuflusses.

*Ausführungsbeispiel I:*

Als Ausgangsmaterialien wurden 12 mm dicke Platten der folgenden drei schmelzmetallurgisch hergestellten Cu/Zn/Al-Formgedächtnislegierungen verwendet:

|  |  | Legierung A | Legierung B | Legierung C |
|---|---|---|---|---|
| Kupfer | in Gew.-% | 72,1 | 73,1 | 73,9 |
| Zink | in Gew.-% | 22,1 | 20,7 | 19,5 |
| Aluminium | in Gew.-% | 5,8 | 6,2 | 6,0 |
| $A_s$-Temperatur in °C |  | —12 | +51 | +70 |

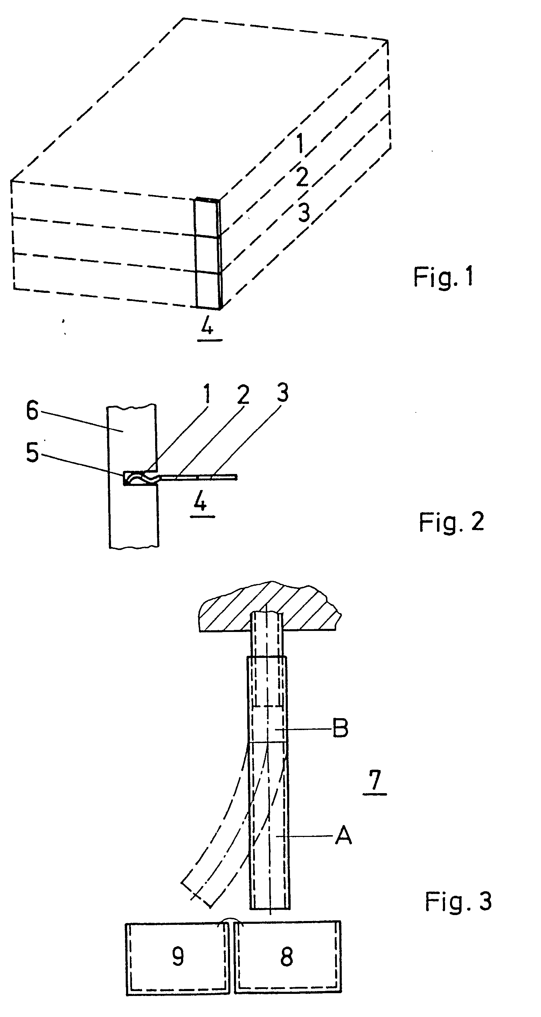

Die flach übereinandergelegten Platten 1, 2, 3 (vgl. Fig. 1) der Legierungen A, B, C wurden zunächst unter Zuhilfenahme von zwei 10 μm dicken, eutektischen Cu/Ag-Folien bei ca. 790°C durch Pressschweissen fest miteinander verbunden. Quer zu den Grenzflächen wurden anschliessend Proben mit den Abmessungen 1 × 5 × 36 mm als Formstücks 4 herausgearbeitet. Diese Formstücke wurden nach einer Lösungsglühung von 10 min in Luft bei 830°C in Wasser abgeschreckt und im Bereich der Komponenten B und C mit je einem Zweiweg-Biegeeffekt von ca. 0,8% in den äussersten Schichten versehen. Bei der Komponente A wurde nach einer Kühlung unter den Temperaturwert $M_f$ ein Einweg-Biegeeffekt von 2% in den äussersten Fasern bei einer Temperatur $T < A_s$, induziert, welcher zur Befestigung des Formstücks 4 durch Verspannen in einem Spalt 5 am Gerätegehäuse 6 dient (vgl. Fig. 2). Die Zweiwegeffekte der Komponenten B und C dienen zur Betätigung von zwei Mikroschaltern bei unterschiedlichen Temperaturen.

*Ausführungsbeispiel II:*

Als Ausgangsmaterialien dienen zwei Pulvermischungen, wobei die daraus pulvermetallurgisch hergestellten Formgedächtnislegierungen folgende Zusammensetzungen aufweisen:

|  |  | Legierung A | Legierung B |
|---|---|---|---|
| Kupfer | in Gew.-% | 73,7 | 72,1 |
| Zink | in Gew.-% | 20,4 | 22,1 |
| Aluminium | in Gew.-% | 5,9 | 5,8 |
| $A_s$-Temperatur in °C | +30 | —12 |

In einer zylindrischen Presse mit einem Innendurchmesser von 30 mm und einer Höhe von 250 mm, welche mit einem Kern von 14 mm Durchmesser versehen war, wurde abwechselnd bis auf eine Höhe von 80 mm Pulver der Legierung A bzw. eine 24 mm hohe Pulverschicht der Legierung B eingefüllt und zur Erzeugung einer definierten Grenzfläche zwischendurch jeweils mit 3000 bar einachsig vorgepresst. Zur weiteren Verdichtung wurde der Grünling unter Zuhilfenahme von Gummischläuchen isostatisch mit einem Druck von 5000 bar gepresst. Das auf diese Weise erhaltene Rohr wurde 30 min bei 910°C unter Schutzgas vorgesintert, 6 h bei 950°C fertiggesintert und danach bei 850°C einem Strangpressvorgang mit Dorn unterworfen. Durch Kaltziehen wurde schliesslich ein Rohr mit einem Aussendurchmesser von 13 mm und einer Wandstärke von 1,5 mm erhalten. Aus diesem Rohr wurden Formstücke 7 (Fig. 3) mit jeweils einem 180mm langen Bereich der Legierung A und einem 50 mm langen Bereich der Legierung B hergestellt. Nach einer 10minütigen Lösungsglühung bei 830°C in Luft und Abschrecken in Wasser wurde in der Komponente A ein Zweiweg-Biegeeffekt von ca. 1% in den äussersten Fasern durch Trainieren induziert. Die Komponente B wurde zunächst unter die Temperatur $M_f$ abgekühlt, und danach wurde durch eine 3,5%ige Aufweitung des Innendurchmessers ein Formgedächtniseffekt induziert. Mittels des Formgedächtniseffektes der Komponente B kann ein solches Formstück 7 auf einfache Weise an einer Wasserleitung befestigt werden, während der Zweiwegeffekt der Komponente A beispielsweise zur Wärmerückgewinnung aus Abwasser ausgenutzt werden kann. In einer solchen Anordnung strömt beispielsweise Wasser mit Temperaturen unterhalb von 35°C in einen Behälter 8. Beim Auftreten von Abwasser mit Temperaturen > 35°C wird dieses heissere Abwasser durch Schwenken des Rohrabschnittes mit Zweiwegeffekt nicht mehr im Behälter 8, sondern in einem getrennten Behälter 9 gesammelt. Entsprechend erweiterte Elemente eignen sich in besonderer Weise für den Einsatz bei der fraktionierenden Destillation von Flüssigkeiten.

Bei den genannten Vorrichtungen kann es je nach Anwendungsfall auch zweckmässig sein, anstelle des Biege-Zweiwegeffektes einen Torsions-Zweiwegeffekt zu induzieren und für die Verstellbewegung zu nutzen.

## Patentansprüche

1. Bauelement zur Erzeugung einer Verstellbewegung unter Verwendung von mehreren miteinander verbundenen Abschnitten aus einem Verbundwerkstoff mit Formgedächtniseigenschaften, welche entsprechend der Anzahl der Abschnitte voneinander unabhängige temperaturspezifische Formänderungen ausführen, dadurch gekennzeichnet, dass die Abschnitte mit Formgedächtniseigenschaften metallurgisch verbunden sind und ein integrales Formstück bilden.

2. Bauelement nach Anspruch 1, dadurch gekennzeichnet, dass ein Abschnitt mit Formgedächtniseffekt als kraftschlüssiger Halteteil für das Formstück ausgebildet ist.

3. Bauelement nach Anspruch 1, dadurch gekennzeichnet, dass das Formstück eine Reihenanordnung von Abschnitten mit Formgedächtniseigenschaften und mit in gleicher Richtung sich verändernden Umwandlungstemperaturen enthält.

4. Bauelement nach Anspruch 3, dadurch gekennzeichnet, dass die Änderung der Umwandlungstemperaturen in den einzelnen Abschnitten durch eine lineare bzw. stufenförmige Änderung der chemischen Zusammensetzung dieser Abschnitte erzeugt wird.

5. Bauelement nach Anspruch 1, dadurch gekennzeichnet, dass an dem Formstück mindestens ein Abschnitt aus einer formgedächtnisfreien Komponente vorgesehen ist.

6. Bauelement nach Anspruch 1, dadurch gekennzeichnet, dass an dem Formstück mindestens ein Abschnitt mit Formgedächtniseigenschaften vorgesehen ist, welcher im Betriebszustand superelastische Eigenschaften aufweist.

7. Verfahren zur Herstellung eines Bauelements nach Anspruch 1, dadurch gekennzeichnet, dass die Formgedächtniskomponenten und gegebenenfalls formgedächtnisfreie Komponenten zu einem Verbundwerkstoff als Halbzeug metallurgisch verbunden werden, und dass das Formstück aus diesem Halbzeug geformt wird, wobei die erforderlichen Formgedächtniseffekte durch Behandlung des fertigen Formstücks erzeugt werden.

8. Verfahren nach Anspruch 7, dadurch gekennzeichnet, dass ein Werkstoff mit Reihenanordnung differentieller, in ihrer chemischen Zusammensetzung unterschiedlicher Abschnitte, durch Zonenschmelzen erzeugt wird.

9. Verfahren nach Anspruch 7, dadurch gekennzeichnet, dass die Herstellung und die Verbindung der Komponenten pulvermetallurgisch erfolgt.

## Claims

1. A component for producing an adjusting movement by using several interconnected portions of a composite material having shape memory properties, which effect temperature-specific changes of shape corresponding to the number of portions but independent of each other, characterized in that the portions with shape memory properties are metallurgically connected and form an integral shaped part.

2. A component according to claim 1, characterized in that one portion with shape memory effect is formed as a friction-locking carrier bracket for the shaped part.

3. A component according to claim 1, characterized in that the shaped part comprises a series arrangement of portions with shape memory properties and with transformation temperatures altering in the same direction.

4. A component according to claim 3, characterized in that the alteration of the transformation temperatures is effected in the individual portions by a linear or stepped alteration of the chemical composition of these portions.

5. A component according to claim 1, characterized in that at least one portion of a shape memory-free element is provided on the shaped part.

6. A component according to claim 1, characterized in that at least one portion with shape memory properties is provided on the shaped part, which portion comprises superelastic properties under operating conditions.

7. A process for producing a component according to claim 1, characterized in that the shape memory elements and optionally shape memory-free elements are connected together metallurgically into a composite material forming a semi-finished product, and that the shaped part is formed from this semi-finished product, the necessary shape memory effects being produced by treatment of the finished shaped part.

8. A process according to claim 7, characterized in that a material with series arrangement of differential portions of different chemical compositions is produced by zone melting.

9. A process according to claim 7, characterized in that the production and connection of the elements is effected by powder metallurgy.

## Revendications

1. Composant destiné à produire un déplacement par l'utilisation de plusieurs portions, reliées ensemble, d'un matériau composite possédant des propriétés de mémoire de forme, lesquelles provoquent des changements de forme spécifiques de la température indépendants l'un de l'autre en fonction du nombre de ces portions, caractérisé en ce que les portions possédant ces propriétés de mémoire de forme sont reliées par des techniques métallurgiques et constituent une pièce de forme monobloc.

2. Composant selon la revendication 1, caractérisé en ce qu'une portion ayant un effet mémoire de forme constitue un élément de maintien de force pour la pièce de forme.

3. Composant selon la revendication 1, caractérisé en ce que la pièce de forme comporte un agencement de rangées de portions possédant des propriétés de mémoire de forme et dont les températures critiques changent dans le même sens.

4. Composant selon la revendication 3, caractérisé en ce que le changement des températures critiques dans les différentes portions résulte d'une variation linéaire ou par paliers de la composition chimique de ces portions.

5. Composant selon la revendication 1, caractérisé en ce qu'on prévoit sur la pièce de forme au moins une portion en un matériau dépourvu de mémoire de forme.

6. Composant selon la revendication 1, caractérisé en ce qu'on prévoit sur la pièce de forme au moins une portion possédant des propriétés de mémoire de forme, qui présente des propriétés superélastiques en service.

7. Procédé pour fabriquer un composant selon la revendication 1, caractérisé en ce que les éléments possédant une mémoire de forme et éventuellement ceux qui en sont dépourvus sont reliés par des techniques métallurgiques pour former un matériau composite en tant que produit semi-fini, et en ce que la pièce de forme est formée à partir de ce produit semi-fini, les effets de mémoire de forme exigés étant obtenus par traitement de la pièce de forme terminée.

8. Procédé selon la revendication 7, caractérisé en ce qu'on produit par fusion de zones un matériau ayant un agencement de rangées de portions différentielles ayant des compositions chimiques différentes.

9. Procédé selon la revendication 7, caractérisé en ce que la liaison et la fabrication des éléments constitutifs sont réalisées par des techniques de la métallurgie des poudres.

Fig. 1

Fig. 2

Fig. 3